(19) **Europäisches Patentamt**
**European Patent Office**
**Office européen des brevets**

(11) **EP 3 503 566 A1**

(12) **EUROPEAN PATENT APPLICATION**

(43) Date of publication:
26.06.2019 Bulletin 2019/26

(51) Int Cl.:
*H04N 21/4223* (2011.01)       *G06T 1/00* (2006.01)
*H04B 10/116* (2013.01)       *H04N 21/442* (2011.01)
*H04N 21/8358* (2011.01)

(21) Application number: 17209639.8

(22) Date of filing: 21.12.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Vestel Elektronik Sanayi ve Ticaret A.S. 45030 Manisa (TR)**

(72) Inventor: **YILDIZ,, Özgür**
**45030 Manisa (TR)**

(74) Representative: **Flint, Adam**
**Page White & Farrer**
**Bedford House**
**John Street**
**London WC1N 2BF (GB)**

(54) **APPARATUS AND METHOD FOR ENCODING LIGHT COMMUNICATION INFORMATION**

(57) When encoding light communication information to be displayed by a display screen (10) for detection by a receiver (12), the location of the receiver (12) relative to the display screen (10) is determined. A size of a coding block (14) of the image frame is set based on the determined location of the receiver (12) relative to the display screen (10). Light communication information is embedded in the coding block (16) of the image frame.

Image size: M x N

Fig. 3

EP 3 503 566 A1

# Description

## Technical Field

The present disclosure relates to apparatus and a method for encoding light communication information.

## Background

Various proposals have been made for displaying information or other content on a display screen among other content being displayed on the display screen.

To elaborate slightly, and without restricting the scope of the present disclosure, a display screen may be being used to display content to be seen by all viewers, in which that content may be for example a television programme or a film/movie, or information relating to flight times at an airport, train times at a railway station, etc. Other information or content is also displayed on the display screen at the same time. This other information or content may be intended to be viewed only by selected viewers or only using specific viewing devices or may be intended to be viewed without restriction.

## Summary

According to a first aspect disclosed herein, there is provided a method for encoding light communication information to be displayed by a display screen for detection by a receiver, the method comprising:

determining the location of the receiver relative to the display screen;
setting a size of a coding block of the image frame based on the determined location of the receiver relative to the display screen; and
encoding light communication information in the coding block of the image frame.

The light communication information may be encoded as visible light communication information, i.e. wherein the display screen presents the information using visible light. Alternatively or additionally, invisible light may be used.

The coding block may be smaller (i.e. the density of the information across the display screen is greater) when the location of the receiver relative to the display screen is such that the receiver has a better view of the display screen. Conversely, the coding block may be larger (i.e. the density of the information across the display screen is less) when the location of the receiver relative to the display screen is such that the receiver has a worse view of the display screen.

In an example, the size of the coding block is set as a function of the viewing angle of the receiver to the display screen.

In an example, the size of the coding block is set separately for the horizontal direction and the vertical direction of the coding block, with the size of the coding block for the horizontal direction being set as function of the horizontal viewing angle of the receiver to the display screen and the size of the coding block for the vertical direction being set as function of the vertical viewing angle of the receiver to the display screen.

In an example, the size of the coding block is set as a function of the distance of the receiver to the display screen.

In an example, the size of the coding block is set as:

$$M/dh \times N/dv \text{ pixels,}$$

where:

M is the total number of pixels of the image frame in the horizontal direction,
N is the total number of pixels of the image frame in the vertical direction,

$$dh = A \sin \alpha + B \sqrt{(M/u)},$$

and

$$dv = A \sin \alpha + B \sqrt{(N/u)},$$

where:

$\alpha$ is the viewing angle of the receiver relative to the display screen,
u is the distance of the receiver from the display screen, and
A and B are constants.

In an example, encoding light communication information in the coding block of the image frame comprises modulating a property of at least one pixel of the coding block based on the light communication information.

In an example, the property of the at least one pixel comprises at least one of a luminance and a colour hue.

According to a second aspect disclosed herein, there is provided apparatus for encoding light communication information to be displayed by a display screen for detection by a receiver, the apparatus comprising a processor constructed and arranged to:

set a size of a coding block of the image frame based on a location of the receiver relative to the display screen; and
encode light communication information in the coding block of the image frame.

In an example, the processor is configured such that the size of the coding block is set as a function of the viewing angle of the receiver to the display screen.

In an example, the processor is configured such that the size of the coding block is set separately for the horizontal direction and the vertical direction of the coding block, with the size of the coding block for the horizontal direction being set as function of the horizontal viewing angle of the receiver to the display screen and the size of the coding block for the vertical direction being set as function of the vertical viewing angle of the receiver to the display screen.

In an example, the processor is configured such that the size of the coding block is set as a function of the distance of the receiver to the display screen.

In an example, the processor is configured such that the size of the coding block is set as:

$$M/dh \times N/dv \ pixels,$$

where:

M is the total number of pixels of the image frame in the horizontal direction,
N is the total number of pixels of the image frame in the vertical direction,

$$dh = A \sin \alpha + B \sqrt{(M/u)},$$

and

$$dv = A \sin \alpha + B \sqrt{(N/u)},$$

where:

$\alpha$ is the viewing angle of the receiver relative to the display screen,
u is the distance of the receiver from the display screen, and
A and B are constants.

In an example, the processor is configured such that encoding light communication information in the coding block of the image frame comprises modulating a property of at least one pixel of the coding block based on the light communication information.

In an example, the processor is configured such that the property of the at least one pixel comprises at least one of a luminance and a colour hue.

There is also provided a display apparatus comprising a display screen, apparatus as describe above, and a position detector for detecting a location of a said receiver relative to the display screen.

Brief Description of the Drawings

To assist understanding of the present disclosure and to show how embodiments may be put into effect, reference is made by way of example to the accompanying drawings in which:

Figure 1 shows schematically a plan view from above of an example of a display screen and receivers at three different locations relative to the display screen;

Figures 2A and 2B show schematically coding blocks on a display having a first example and a second example of a coding block size respectively;

Figure 3 shows schematically a perspective view of a display screen and a receiver; and,

Figure 4 shows schematically a flow of an example of a method according to an aspect described herein.

Detailed Description

Display devices are used in many different types of consumer apparatus including for example television screens or monitors, computer displays or monitors, and displays for other computing devices, including smartphones, tablet computers, laptop computers, etc. Display devices are also used in many public environments in so-called "signage", for example, for displaying advertisements or for information or entertainment that is of interest to a larger audience.

Information or other content can be added to the underlying images or other content that is being displayed by the display device. The information can in general be added as visible light or invisible light. "Visible" light as used herein is light that is ordinarily visible to the naked (human) eye. Visible light is typically regarded as light with a wavelength in the range of about 390 or 400 nm to 700 nm. A visible light source is a light source that generates visible light (whether directly or as a combination of a source of power that causes another element to emit visible light). In contrast, "invisible" light is light that is not ordinarily visible to the naked (human) eye (though it can be detected and viewed using various different types of camera and other technology of course). Invisible light is therefore typically regarded as light with a wavelength less than about 390 or 400 nm or greater than about 700 nm. As specific examples, infrared is typically defined as light with a wavelength in the range of around 700 nm to 1 mm and ultra violet is typically defined as light with a wavelength in the range of about 10 nm to 400 nm. The additional information can be viewed directly by a human (in the case of visible light being used) though in most applications, the additional information is intended to be viewed using an appropriate viewing device, such as special glasses or goggles, etc., or some imaging device or camera (or for example a smart phone or tablet computer, etc. having a digital camera), etc. (whether visible or invisible light is used). The additional information or content may be messages or commands, etc., which may in general be human-readable (e.g. straightforward text) or machine-readable (e.g. in the form of data tags or barcodes such as bokodes and "QR" or matrix barcodes). The additional information or content may be encrypted.

As will be discussed further below, the (underlying) image that is displayed (which may be for example a static image or one image of a video sequence formed of multiple images) is logically divided into a number of coding blocks in which additional information or content may be respectively encoded. As described herein, the coding blocks may be smaller (i.e. the density of the information added across the display screen is greater) when the location of a receiver relative to the display screen is such that the receiver has a better view of the display screen. Conversely, the coding block may be larger (i.e. the density of the information added across the display screen is less) when the location of the receiver relative to the display screen is such that the receiver has a worse view of the display screen. In particular, in an example, the location of the receiver relative to the display screen is determined; the size of a coding block of the image frame is set based on the determined location of the receiver relative to the display screen; and light communication information is encoded in the coding block of the image frame.

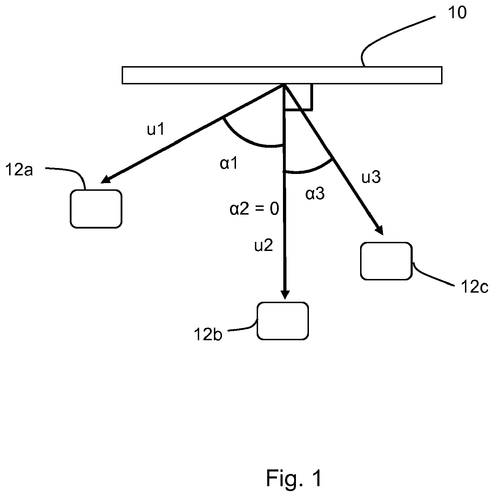

Referring now to Figure 1, this shows schematically a plan view from above of an example of a display screen 10 and receivers 12 at three different locations relative to the display screen 10. One receiver 12a is located a distance u1 from the (centre) of the display screen 10 and is off-centre at an angle $\alpha$1 to a normal to the display screen 10. A second receiver 12b is located directly in front of (the centre of) the display screen 10 (and so at an angle $\alpha$1 = 0 to a normal to the display screen 10) and is a distance from the display screen 10 of u2. A third receiver 12c is located a distance u3 from the display screen 10 and is off-centre at an angle $\alpha$3 to a normal to the display screen 10. Because the different receivers 12 are at different distances from the display screen 10 and/or at different angles relative to the display screen 10, each receiver 12 has a different view of the display screen 12. Even though image processing techniques can be carried out on the respective images obtained by the different receivers 12 to normalise any differences arising from different perspectives, the bit error rate for the differently located receivers 12 varies according to their relative locations relative to the display screen 10. Simply put, some receivers 12 (here, in particular the centre located receiver 12b) have a better view of the display screen than others (here, in particular the first and third receivers 12a, 12c located to the sides or at an angle to the display screen 10) and therefore have a lower bit error rate, and vice versa.

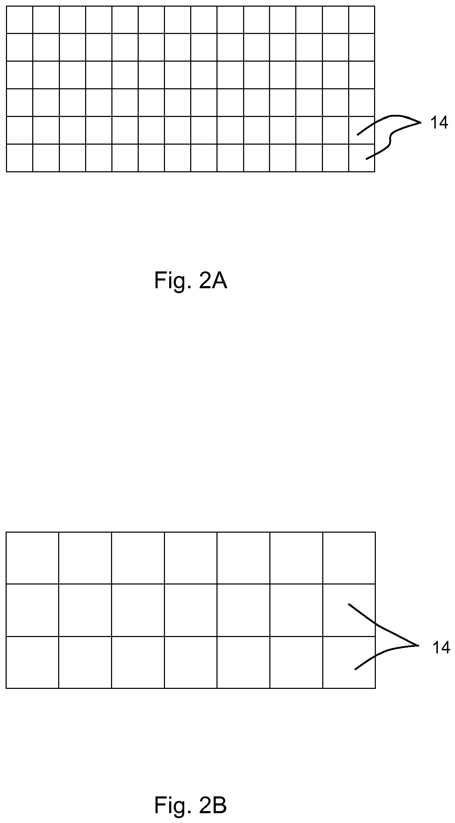

Accordingly, as described herein, the size of the coding block(s) is smaller for receivers 12 that have a better view of the display screen 10 and size of the coding block(s) is larger for receivers 12 that have a poorer view of the display screen 10. This is illustrated schematically in Figures 2A and 2B, which show a display screen 10 or, equivalently, an image frame to be displayed on a display screen 10, with a number of coding blocks 14 indicated, in this case in the form of a regular array of coding blocks 14 across the display. In Figure 2A, the coding blocks 14 are relatively small, which allows a higher density of data to be encoded and presented. This would be suitable for receivers 12 that are located more or less centrally in front of the display screen. In Figure 2B, the coding blocks 14 are relatively large, which only allows a lower density of data to be encoded and presented. This would be suitable for receivers 12 that are located to one side or the other of the display screen.

Each coding block 14 comprises a plurality of pixels. Each pixel 18 comprises a red channel, a blue channel, a green channel (often called "sub-pixels") and optionally another channel, such as an "alpha" channel, a white, a yellow, etc. Each pixel is characterised by a plurality of properties, such as luminance and a colour hue. Light communication information may be encoded in a coding block 14 by modulating the value of a property (such as in particular the luminance and a colour hue) of one or more pixels of the coding block 14, especially in consecutive image frames of a video sequence. The modulation is typically a modulation in amplitude, in frequency or in phase based on the light communication information to be encoded.

Various options for determining the location of the receiver 12 relative to the display screen 10 are possible. For example, the display screen 10 may have a camera that can be used to view its environment and to identify any receivers 12. Appropriate image processing can be carried out on the images received from the camera to determine the location of the receiver(s) 12 relative to the display screen 10. Alternatively or additionally, other sensors may be located in the environment of the display screen 10 to locate the receiver(s) 12. Such sensors may be or include cameras, infrared or other position sensors, etc. Alternatively or additionally, a receiver 12 may have its own location device which provides an output relating to the (absolute) position of the receiver 12, which can be used to identify the location of the receiver 12 relative to the display screen 10. Other alternatives are possible.

Moreover, various options for adjusting the size of the coding blocks 14 according to the location of the receiver 12 relative to the display screen 10 are possible. Some specific examples will be described.

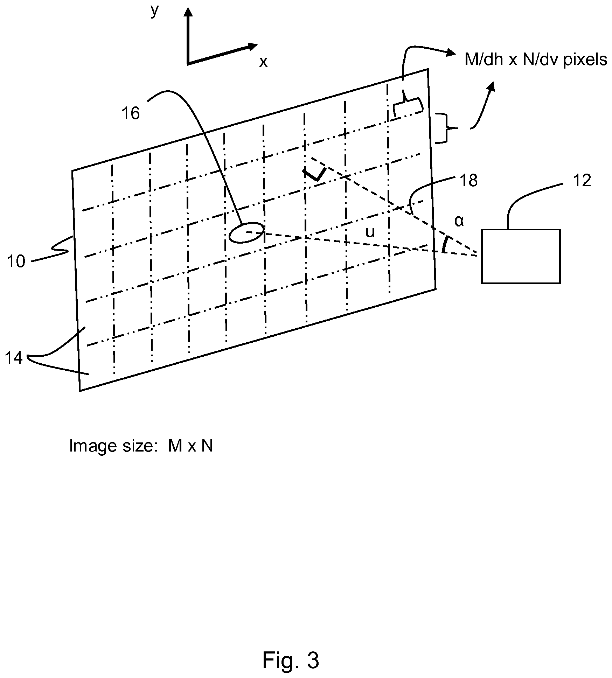

Referring now to Figure 3, this shows a display screen 10 displaying an image with a number of coding blocks 14 and a receiver 12 for viewing the image and the (visible or invisible) light communication information that is embedded in the image. The receiver 12 is a distance u from the centre 16 of the display screen 10. The receiver 12 is at an angle $\alpha$ to a normal 18 to the display screen 10 (i.e. the viewing angle $\alpha$ is the angle subtended by the normal 18 and the view of the receiver 12 to the centre 16 of the display screen 10).

In one example, the size of the coding blocks 14 is set as a function of the viewing angle $\alpha$ of the receiver 12 to the display screen 10. For example, as the viewing angle $\alpha$ increases, the size of the coding blocks 14 is increased. In one example, the size of the coding blocks 14 may be proportional to sin $\alpha$ (possibly subject to a minimum size when $\alpha$ approaches zero, i.e. the receiver 12 is directly or close to being directly in front of the display screen 10, and possibly subject to a maximum size corresponding to the size of the image being displayed). This may be extended by having the size of the coding blocks 14 in a horizontal direction (in the normal view of the display screen 10 where the display screen 10 is vertically upright say) set as a function of the horizontal viewing angle of the receiver 12 to the display screen 10 and, correspondingly, the size of the coding blocks 14 in a vertical direction set as a function of the vertical viewing angle of the receiver 12 to the display screen 10.

In another example, the size of the coding blocks 14 is set as a function of the distance u of the receiver 12 to the display screen 10. For example, as the distance u increases, the size of the coding blocks 14 is increased. In one example, the size of the coding blocks 14 may be proportional to the distance u. The size of the coding blocks 14 may be subject to a minimum size when the distance u approaches zero, i.e. the receiver 12 is close to the display screen 10, and may be subject to a maximum size corresponding to the size of the image being displayed.

In another example, the size of the coding blocks 14 is set as a function of both the distance u of the receiver 12 to the display screen 10 and the viewing angle $\alpha$ of the receiver 12 to the display screen 10. In a specific example, assume that the display screen 10 or the underlying image that is displayed on the display screen 10 has M pixels in the horizontal direction and N pixels in the vertical direction. In that case, by way of example, the size of the coding blocks 14 may be set as:

$$M/dh \times N/dv \text{ pixels}$$

where dh and dv are scaling division factors that depend on the viewing angle $\alpha$ of the receiver 12 and the distance u of the receiver 12 from the display screen 10. In an example:

$$dh = A \sin \alpha + B \sqrt{(M/u)},$$

and

$$dv = A \sin \alpha + B \sqrt{(N/u)},$$

where A and B are constants.

The effect of this is that if $\alpha$ or u increase, then dv and dh decrease, causing the size of the coding blocks 14 to increase.

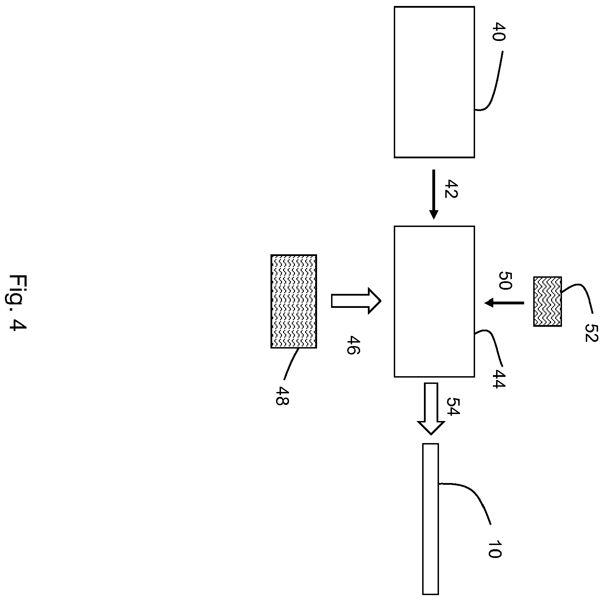

Referring now to Figure 4, this shows schematically a flow of an example of a method according to an aspect described herein. A position sensor 40, which may be a camera associated with the display screen 10 or some other position sensor as discussed above, sends 42 to a modulator 44 information concerning the position of a receiver relative to the display screen 10. The modulator 44 may be part of the display device that includes the display screen 10 or provided as some separate component. The information concerning the position of a receiver relative to the display screen 10 is used by the modulator 44 to determine the size of the coding blocks which are used to encode additional content in the image that is finally displayed.

The modulator 44 also receives 46 the underlying image or other content data 48 which is to be displayed by the display screen 10. The underlying image or other content may be received from for example some content provider (such as a television broadcaster) via satellite, cable, terrestrial transmission, etc., or some other source, such as a DVD or Blu Ray player or other local storage or on-demand from some remote storage.

The modulator 44 also receives 50 the additional content 52 which is to be added to or embedded in the underlying image or other content data 48 which is to be displayed by the display screen 10. The additional content 52 may be added manually by a user, for example by typing into a keyboard associated with the display device, and/or by some automated process.

The additional content 52 is then processed by the modulator 44 so that the additional content 52 is effectively added to or embedded into one or more coding blocks. The additional content 52 is embedded in the underlying image or other content data 48 using the coding blocks which have a size as determined according to the location of the receiver.

Finally, the composite image, which includes the underlying image or other content data 48 and the additional content 52, is sent 54 to the display screen 10 for display. The composite image may then be viewed by the receiver.

This enables additional content to be added to an image to be viewed by a receiver in a way that provides a balance between maximising the data transfer rate whilst minimising bit error rates that may occur when the receiver views the composite image.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

**Claims**

1. A method for encoding light communication information to be displayed by a display screen for detection by a receiver, the method comprising:

   determining the location of the receiver relative to the display screen;
   setting a size of a coding block of the image frame based on the determined location of the receiver relative to the display screen; and
   encoding light communication information in the coding block of the image frame.

2. A method according to claim 1, wherein the size of the coding block is set as a function of the viewing angle of the receiver to the display screen.

3. A method according to claim 2, wherein the size of the coding block is set separately for the horizontal direction and the vertical direction of the coding block, with the size of the coding block for the horizontal direction being set as function of the horizontal viewing angle of the receiver to the display screen and the size of the coding block for the vertical direction being set as function of the vertical viewing angle of the receiver to the display screen.

4. A method according to any of claims 1 to 3, wherein the size of the coding block is set as a function of the distance of the receiver to the display screen.

5. A method according to any of claims 1 to 4, wherein the size of the coding block is set as:

$$M/dh \times N/dv \text{ pixels,}$$

where:

   M is the total number of pixels of the image frame in the horizontal direction,
   N is the total number of pixels of the image frame in the vertical direction,

$$dh = A \sin \alpha + B \sqrt{(M/u)},$$

and

$$dv = A \sin \alpha + B \sqrt{(N/u)},$$

where:

   $\alpha$ is the viewing angle of the receiver relative to the display screen, u is the distance of the receiver from the display screen, and A and B are constants.

6. A method according to any of claims 1 to 5, wherein encoding light communication information in the coding block of the image frame comprises modulating a property of at least one pixel of the coding block based on the light communication information.

7. A method according to claim 6, wherein the property of the at least one pixel comprises at least one of a luminance and a colour hue.

8. Apparatus for encoding light communication information to be displayed by a display screen for detection by a receiver, the apparatus comprising a processor constructed and arranged to:

    set a size of a coding block of the image frame based on a location of the receiver relative to the display screen; and
    encode light communication information in the coding block of the image frame.

9. Apparatus according to claim 8, wherein the processor is configured such that the size of the coding block is set as a function of the viewing angle of the receiver to the display screen.

10. Apparatus according to claim 9, wherein the processor is configured such that the size of the coding block is set separately for the horizontal direction and the vertical direction of the coding block, with the size of the coding block for the horizontal direction being set as function of the horizontal viewing angle of the receiver to the display screen and the size of the coding block for the vertical direction being set as function of the vertical viewing angle of the receiver to the display screen.

11. Apparatus according to any of claims 8 to 10, wherein the processor is configured such that the size of the coding block is set as a function of the distance of the receiver to the display screen.

12. Apparatus according to any of claims 8 to 11, wherein the processor is configured such that the size of the coding block is set as:

$$M/dh \times N/dv \text{ pixels,}$$

where:

    M is the total number of pixels of the image frame in the horizontal direction,
    N is the total number of pixels of the image frame in the vertical direction,

$$dh = A \sin \alpha + B \sqrt{(M/u)},$$

and

$$dv = A \sin \alpha + B \sqrt{(N/u)},$$

where:

    $\alpha$ is the viewing angle of the receiver relative to the display screen,
    u is the distance of the receiver from the display screen, and
    A and B are constants.

13. Apparatus according to any of claims 8 to 12, wherein the processor is configured such that encoding light communication information in the coding block of the image frame comprises modulating a property of at least one pixel of the coding block based on the light communication information.

14. Apparatus according to claim 13, wherein the processor is configured such that the property of the at least one pixel comprises at least one of a luminance and a colour hue.

15. A display apparatus comprising a display screen, apparatus according to any of claims 8 to 14, and a position detector for detecting a location of a said receiver relative to the display screen.

Fig. 1

14

Fig. 2A

14

Fig. 2B

Image size: M x N

Fig. 3

Fig. 4

Europäisches
Patentamt

European
Patent Office

Office européen
des brevets

# EUROPEAN SEARCH REPORT

Application Number

EP 17 20 9639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2017/119620 A1 (FOUND RES & BUSINESS SEOUL NAT UNIV SCIENCE & TECH [KR]) 13 July 2017 (2017-07-13)<br>* abstract *<br>* paragraph [0010] - paragraph [0020] *<br>* paragraph [0101] - paragraph [0109] *<br>* paragraph [0119] - paragraph [0123] *<br>* figures 1,9,11,14 * | 1-4,<br>6-11,<br>13-15<br>5,12 | INV.<br>H04N21/4223<br>G06T1/00<br>H04B10/116<br>H04N21/442<br>H04N21/8358 |
| X | US 2017/061900 A1 (UEKI AKIHIRO [JP] ET AL) 2 March 2017 (2017-03-02)<br>* abstract *<br>* paragraph [0039] - paragraph [0061] *<br>* paragraph [0166] - paragraph [0207] *<br>* figures 1,2,14-17 * | 1,4,8,<br>11,15 | |
| X | EP 2 940 898 A1 (PANASONIC IP CORP AMERICA [US]) 4 November 2015 (2015-11-04)<br><br>* abstract *<br>* paragraph [0095] - paragraph [0096] *<br>* paragraph [0226] - paragraph [0227] *<br>* paragraph [0276] - paragraph [0279] *<br>* figures 7,23,37,38 * | 1,2,4,<br>6-9,11,<br>13,14 | |

TECHNICAL FIELDS
SEARCHED     (IPC)

H04B
G06T
H04N

The present search report has been drawn up for all claims

| Place of search | Date of completion of the search | Examiner |
|---|---|---|
| The Hague | 1 June 2018 | Hampson, Frances |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 9639

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2018

| Patent document cited in search report | | Publication date | Patent family member(s) | | Publication date |
|---|---|---|---|---|---|
| WO 2017119620 | A1 | 13-07-2017 | NONE | | |
| US 2017061900 | A1 | 02-03-2017 | JP WO2016047030 | A1 | 06-07-2017 |
| | | | US 2017061900 | A1 | 02-03-2017 |
| | | | WO 2016047030 | A1 | 31-03-2016 |
| EP 2940898 | A1 | 04-11-2015 | CN 104871453 | A | 26-08-2015 |
| | | | CN 104885383 | A | 02-09-2015 |
| | | | EP 2940895 | A1 | 04-11-2015 |
| | | | EP 2940898 | A1 | 04-11-2015 |
| | | | JP 5608834 | B1 | 15-10-2014 |
| | | | JP 5715301 | B2 | 07-05-2015 |
| | | | JP 2015111814 | A | 18-06-2015 |
| | | | JP 2015156663 | A | 27-08-2015 |
| | | | JP WO2014103157 | A1 | 12-01-2017 |
| | | | JP WO2014103158 | A1 | 12-01-2017 |
| | | | SG 11201400251X | A | 28-08-2014 |
| | | | SG 11201504980T | A | 30-07-2015 |
| | | | US 2014184914 | A1 | 03-07-2014 |
| | | | US 2014185860 | A1 | 03-07-2014 |
| | | | US 2016086583 | A1 | 24-03-2016 |
| | | | WO 2014103157 | A1 | 03-07-2014 |
| | | | WO 2014103158 | A1 | 03-07-2014 |

EPO FORM P0459

For more details about this annex : see Official Journal of the European Patent Office, No. 12/82